# EUROPEAN PATENT SPECIFICATION

(11) **EP 1 876 809 B1**
(45) Date of publication and mention of the grant of the patent: **23.05.2018**
(21) Application number: 07110489.7
(22) Date of filing: 18.06.2007
(51) Int. Cl.: H04N 1/62

(54) **Image processing device**
Bildverarbeitungsvorrichtung
Dispositif de traitement de l'image

(30) Priority: 04.07.2006 JP 2006184944
(43) Date of publication of application: 09.01.2008
(73) Proprietor: OMRON CORPORATION, Kyoto-shi, Kyoto 600-8530 (JP)
(72) Inventor: Kiuchi, Yutaka, Shimogyo-ku, Kyoto-shi, Kyoto 600-8530 (JP); Kato, Yutaka, Shimogyo-ku, Kyoto-shi, Kyoto 600-8530 (JP)
(74) Representative: Kilian Kilian & Partner

(56) References cited:
- EP-A- 1 612 730
- EP-A- 1 619 875
- JP-A- H1 093 806
- JP-A- 2003 250 122
- JP-A- 2004 096 400
- JP-A- 2005 064 809
- US-A1- 2004 240 729

## Description

### BACKGROUND OF THE INVENTION

### 1. Field of the Invention

The present invention relates to an image processing device for specifying and extracting a region having a color set in advance from an acquired image.

### 2. Description of the related art

Manufacturing premises have been progressively automated in terms of power saving and higher efficiency. Great number of sensors using light, electricity, electric wave, acoustic wave, and the like are used to realize automation. Among such sensors, an image sensor that photographs products and the like, and processes the photographed image to determine quality of the product and to specify an ID of the product is frequently used.

Since detecting function similar to the detection by human eyes can be realized by the use of image sensors, the application range thereof is wide.

Most image sensors are configured by an imaging section for photographing a detection target and an image processing section (also referred to as amplifier section) for processing the image obtained from the imaging section, and determines whether or not a region having a predetermined shape is included in the image photographed by the imaging section.

Among universal image sensors, in particular, a sensor that is configured to determine the shape of the detection target based on the grayscale image that does not include color information is common. However, with the advancement of information technology in recent years, an image sensor capable of simultaneously performing determination of color in addition to conventional determination of shape using the color image has been developed for practical use even in the universal image sensor. Such determination of color includes processes of specifying and extracting a region having a color registered in advance from an acquired image.

In the conventional detection of shape based on the grayscale image, the shape is determined based on a so-called gray image composed of a plurality of pixels each including a one-dimensional tone value (e.g., 256 shades). The color of each pixel configuring the color image is expressed with a three-dimensional coordinate configured by RGB values having the ratio of each color of red, green, and blue based on the three primary colors of light, or values of hue, value, and chroma, which are the three attributes of color, thereby defining the color. Therefore, three parameters are required to specify the region having a color (specific color) set in advance from the acquired image. Such parameters are also referred to as color parameters.

Therefore, an image processing device for acquiring a model image for extracting a specific color, and displaying the color included in the model image is proposed. By way of example, an image processing device capable of automatically extracting the color parameters of a specific point (pixel) is disclosed in, for example, Japanese Patent Application Laid-Open No. 2-194479. JP2004096400 discloses an image sensor capable to perform color rendering suitable for a display device, while setting of a color rendering range according to a photographing purpose. US2004240729 discloses an image processing device and color modification system for performing color modifications of an obtained image.

The color parameters of each pixel often slightly differ even in an image that appears to have a single color to the human eye. In other words, the image processing device may determine the region as a region including a plurality of colors that differ from each other.

Therefore, in the general image processing device for processing the color pixels, a process of giving a threshold value width to the color parameters for the specific color, and assuming the pixel having a color within the range of the threshold value width as the specific color is performed. In other words, a practical region specification is impossible unless an optimum color parameter range is set according to the dispersion degree of the color parameters of the entire image.

Although the color parameters at a specific point (pixel) can be acquired in the conventional image processing device, the optimum color parameter range cannot be acquired according to the dispersion degree of the color parameters of the entire acquired image. Thus, the specific color must be determined through trial and error according to various occurrence conditions such as illumination and reflectance, and the image processing device cannot be satisfactorily functioned without intuition and experience of a skilled person.

### SUMMARY OF THE INVENTION

In view of solving the above problems, the present invention aims to provide an image processing device capable of easily setting an optimum color parameter range according to the dispersion degree of color parameters of an acquired image, as defined in claims 1 to 5.

### BRIEF DESCRIPTION OF THE DRAWINGS

FIG. 1 shows a schematic block diagram of an image sensor apparatus 100 including an image processing device 1 according to an embodiment of the present invention;
FIG. 2 shows a flowchart describing mode setting of the image processing device 1 according to the embodiment of the present invention;
FIG. 3 shows a view for explaining an execution screen of measurement mode according to the embodiment of the present invention;
FIG. 4 shows a view for explaining an outline of a process in a frame memory FM1 stored in a main storage unit 8;
FIG. 5 shows a flowchart describing execution of a process of counting a color area according to the embodiment of the present invention;
FIG. 6 shows a view for explaining an execution screen of setting mode according to the embodiment of the present invention;
FIG. 7 shows a flowcart describing an input process of a specific point according to the embodiment of the present invention;
FIG. 8 shows a flowchart describing an image extraction process according to the embodiment of the present invention;
FIG. 9 shows a view for explaining a case of inputting a specific point with respect to a partial region of an image shown in the image display region 204 of FIG. 6;
FIG. 10 shows a view for explaining a case of adjusting the range of a specific color in a specific color map;
FIG. 11 shows a view describing an image to be extraction-processed and an image not to be extraction-processed in the image shown in the image display region 204 of FIG. 6;
FIG. 12 shows another view for explaining the case of inputting a specific point with respect to the partial region of the image shown in the image display region 204 of FIG. 6;
FIG. 13 shows another view for explaining the case of inputting a specific point with respect to the partial region of the image shown in the image display region 204 of FIG. 6;
FIG. 14 shows a view for explaining a case in which the check box of the extracted image display in the display setting region 207 in FIG. 13 is checked;
FIG. 15 shows a view for explaining a determination condition setting mode;
FIG. 16 shows a determination flowchart for determining quality of a color area in the measurement mode of color area;
FIG. 17 shows a view for explaining specification of a color parameter range according to a variant of the embodiment; and
FIG. 18 shows another view for explaining specification of a color parameter range according to a variant of the embodiment.

### DETAILED DESCRIPTION OF THE PREFERRED EMBODIMENTS

Embodiments according to the present invention will now be described in detail with reference to the drawings. The same or the equivalent parts are denoted by the same reference numerals throughout the drawings, and the description thereof will be omitted.

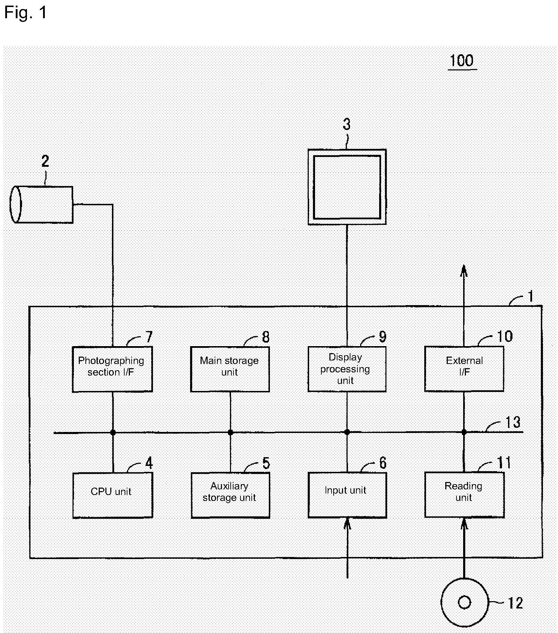

FIG. 1 shows a schematic block diagram of an image sensor apparatus 100 including an image processing device 1 according to the embodiment of the present invention.

With reference to FIG. 1, the image sensor apparatus 100 in the embodiment according to the present invention photographs a continuously conveyed product arranged on a production line etc., specifies a region having a specific color from the photographed image, and determines quality etc. of the product, by way of example. Moreover, the image sensor apparatus 100 may be configured to output the determination result to another apparatus (not shown). The image sensor apparatus 100 is configured by the image processing device 1, an imaging section 2, and a display section 3.

The imaging section 2 includes an imaging element such as CCD (Coupled Charged Device) and CMOS (Complementary Metal Oxide Semiconductor) sensor and a lens, and photographs an inspection target and outputs the photographed image to the image processing device 1 by way of example. The image photographed by the imaging section 2 may be a still image or a moving image.

The display section 3 displays a processing result in the image processing device 1, an image photographed by the imaging section 2, and the like to the user. By way of example, the display section 3 is configured by a liquid crystal display (LCD), a plasma display, an electro-luminescence display (EL display), or the like. In the present embodiment, the imaging section 2 and the display section 3 are arranged separately from the image processing device 1, but the configuration is not limited thereto, and the imaging section 2 and the display section 3 may obviously be integrated with the image processing device 1.

The image processing device 1 includes a CPU unit 4, an auxiliary storage unit 5, an input unit 6, a photographing section interface (photographing section I/F) 7, a main storage unit 8, a display processing unit 9, an external interface (external I/F) 10, a reading unit 11, and a bus 13, and is realized by a personal computer etc. by way of example.

The photographing section I/F 7 is electrically connected to the imaging section 2, receives a picture signal photographed by the imaging section 2, acquires color information of each pixel by performing a predetermined signal conversion process, and thereafter, outputs the acquired color information to the CPU unit 4 via the bus 13. Specifically, the photographing section I/F 7 performs frame synchronization on the picture signal received from the imaging section 2, and demodulates the color information of each pixel developed on a time axis and transmitted, to acquire the color parameters for each pixel. For instance, the photographing section I/F 7 acquires variables (hereinafter also referred to as RGB information) of red, blue, and green having the ratio of red, green, and blue, or variables (hereinafter also referred to as HVC information) of hue, value, and chroma, which are the three attributes of color. The variables are not limited to RGB information, and other independent variables such as so-called CMY information including variables of cyan, magenta, and yellow may be used. In the present embodiment, the photographing section I/F 7 is assumed to acquire and output the HVC information by way of example.

The main storage unit 8 stores image data photographed by the imaging section 2, image data under image processing in the CPU unit 4, and the like according to a program executed in the CPU unit 4. The main storage unit 8 includes a semiconductor storage element such as DRAM (Dynamic Random Access Memory) and SRAM (Static Random Access Memory), by way of example.

The display processing unit 9 receives data for displaying an image after processed in the CPU unit 4, an image photographed by the imaging section 2, a screen prompting the user's input, a screen showing a processing state of the CPU unit 4 etc., performs a predetermined signal process, and outputs the result to the display section 3 as picture signals.

The external interface 10 outputs a processing result etc. executed by the CPU unit 4 to the outside. By way of example, the external interface 10 includes a contact output (DO) configured by a photodiode, a transistor, a relay etc., and a communication unit according to USB (Universal Serial Bus), RS-232C (Recommended Standard 232 version C), IEEE (Institute of Electrical and Electronic Engineers) 1394, SCSI (Small Computer System Interface), Ethernet (registered trademark), and the like.

The auxiliary storage unit 5 includes a non-volatile storage region, and stores an image photographed by the imaging section 2, a processing result of the image after processed in the CPU unit 4, and the like. By way of example, the auxiliary storage unit 5 includes semiconductor memories such as a hard disc drive (HDD), a flash memory card, an SD memory card, and an IC memory card. In the present embodiment, the auxiliary storage unit 5 and the main storage unit 8 are assumed to be storage regions independent from each other, but may be configured as one storage unit.

The input unit 6 receives setting and instructions from the user, and provides the same to the CPU unit 4 via the bus 13. The setting and instructions from the user are assumed to be provided by operating a mouse or a pointing device, a keyboard, and the like (not shown). A touch screen or a touch panel may be used for the screen itself of the display section 3 that displays an interface screen so that the user can input or operate by directly touching the screen with his/her hand, or a voice input and other existing input means may be used, or these may be used together to provide setting and instructions.

The reading unit 11 receives a recording medium 12 on which a program to be executed by the CPU unit 4 is stored and reads the program, and provides the same to the auxiliary storage unit 5 or the main storage unit 8. The recording medium 12 merely needs to store non-volatile data, and includes a removable recording medium such as an optical disc (CD (Compact Disc), DVD (Digital Versatile Disc)-ROM/RAM/R/RW, MO (Magnetic Optical Disc), MD (Mini Disc)), a flexible disc, a magnetic tape, and the like.

The CPU unit 4 receives the HVC information generated from the color image photographed by the imaging section 2 through the photographing section I/F 7, and stores the HVC information in the main storage unit 8 in association with the coordinate of each pixel. The CPU unit 4 then sets two modes, specifically, "measurement mode" or "setting mode" according to the instruction from the input unit 6, and executes various processes in the modes. In the "measurement mode", the CPU unit 4 recognizes an image acquired from the photographing section I/F 7 as an image to be measured, specifies a region of a specific color included in the image to execute matching comparison with a model image, and executes quality determination of whether or not the specified image satisfies a predetermined condition corresponding to the model image. In the "setting mode", the CPU unit 4 executes setting of various measurements such as setting of the specific color in the "measurement mode".

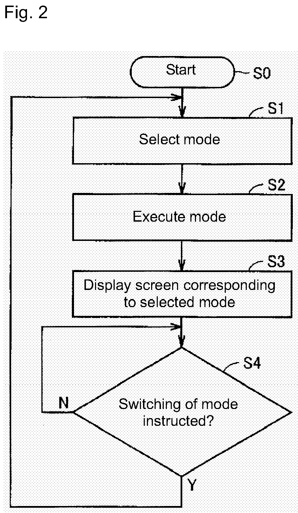

FIG. 2 shows a flowchart describing the mode setting of the image processing device 1 according to the embodiment of the present invention.

First, a power is turned ON (start) (step S0), selection of the two types of modes is prompted on the screen of the display section 3 (step S1), and the user operates the input unit 6 to execute one of the modes (step S2). A screen corresponding to the selected mode is then displayed (step S3). For instance, when the user operates the input unit 6 and selects "measurement mode", the measurement mode screen is displayed on the display section 3. When the user selects the "setting mode", the setting mode screen is displayed on the display section 3. Whether or not switching of the mode is instructed is then determined (step S4). If an instruction to switch the mode is made in step S4, the process returns to the initial step S1, the corresponding mode selection is executed, and the screen of the corresponding mode is displayed as described above.

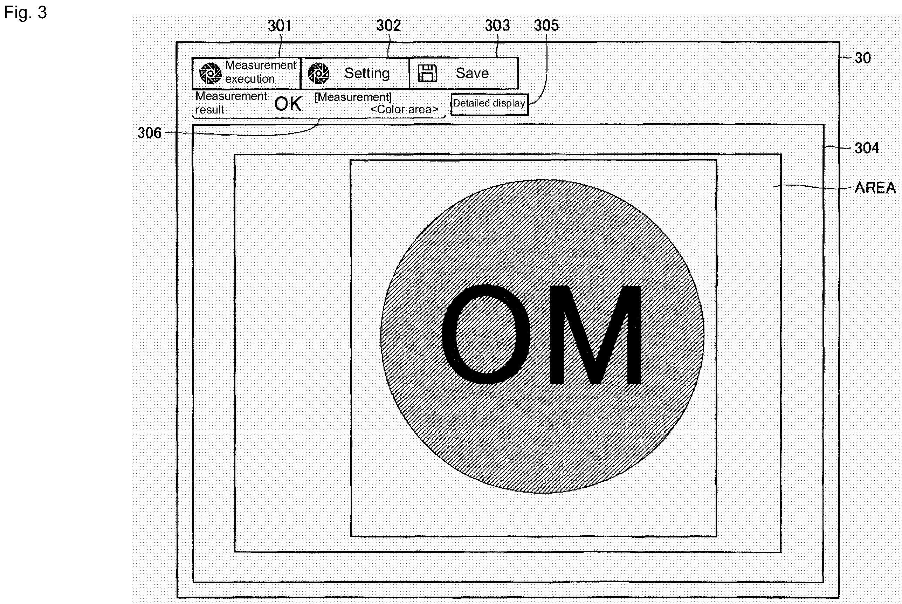

FIG. 3 shows a view describing an execution screen of measurement mode according to the embodiment of the present invention.

With reference to FIG. 3, a case where the "measurement mode" is selected by the operation of the input unit 6 by the user is shown. Specifically, a case where the execution screen of measurement mode (measurement mode screen) is displayed in a display region 30 of the display section 3 is shown.

In the display region 30, buttons for executing various functions are displayed at the region on the upper side, and the function associated with the button is executed by pressing (clicking) the button using a pointing device such as mouse. By way of example, a "measurement execution" button 301 for instructing execution of measurement based on a predetermined condition, a "setting" button 302 for instructing the execution of the "setting mode" by which switching from the "measurement mode" to the "setting mode" can be performed, and a "save" button 303 for instructing execution of recording of an observed image displayed on an observed image display region 304 in the storage region of the auxiliary storage unit 5 are shown.

The observed image display region 304 for displaying an observed image is shown in the display region 30 of the display section 3. Here, a processing target display region AREA for pointing out the region in which the measurement process to be described later is executed, is set in the observed image display region 304 by the user in advance, a circular figure surrounded by a square is displayed in the region set as the processing target display region AREA, and an image with character notation indicating "OM" which are two alphabets is displayed at the central part of the circle. The setting of the processing target display region AREA enables the range of the region to be set by specifying an arbitrary pixel in the observed image display region 304 through operation of the mouse and the like by the user.

Furthermore, the display region 306 displaying the measurement result in the measurement mode and a "detailed display" button 305 for enlarging the observed image in the processing target display region AREA displayed in the observed image display region 304 are shown between the buttons 301 to 303 for executing various functions described above and the observed image display region 304. Here, the region of the specific color set in advance to be described later included in the observed image in the processing target display region AREA is specified, and the quality determination on whether or not the specified image satisfies a predetermined condition is executed by pressing the "measurement execution" button 301 described above in the display region 306. Specifically, the quality determination is executed by measuring a color area to be described later. In the present embodiment, an "OK" determination, i.e., a good determination is detected as the measurement result is shown. Although not shown, regarding the pixels constituting the image specified as the measurement result, the number of pixels satisfying the predetermined condition may be converted to numerical data and displayed together.

The measurement of the color area mentioned above that is performed on the processing target display region AREA of the observed image display region 304 according to the embodiment of the present invention in the measurement mode will be described below. The setting of the specific color will be described in the setting mode to be described later.

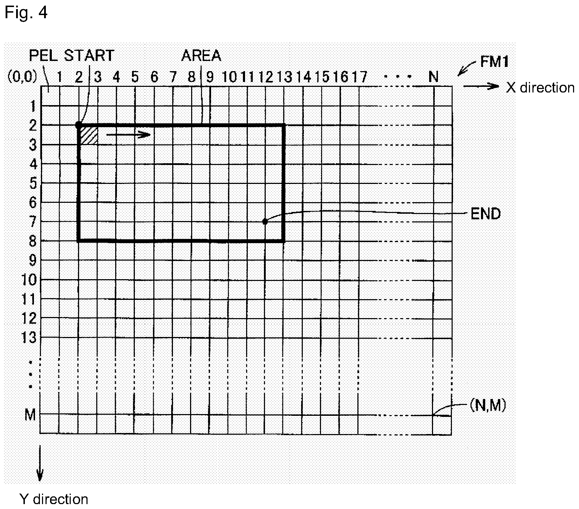

FIG. 4 shows a view for explaining the outline of the process in a frame memory FM1 stored in the main storage unit 8.

With reference to FIG. 4, the CPU unit 4 associates the HVC information on each pixel of the observed image display region 304 for the color image photographed by the imaging section 2 with the coordinate of the frame memory FM1 formed in the main storage unit 8 to store the same. By way of example, if the observed image display region is configured by a plurality of pixels PEL arranged in a matrix form of (N+1)×(M+1) in the color image photographed by the imaging section 2, the frame memory FM1 of two-dimensional array having coordinates of (0, 0) to (N, M) for the coordinate in the X direction (X coordinate) and the coordinate in the Y direction (Y coordinate) is formed in the main storage unit 8. The coordinate of each pixel PEL in FIG. 4 is indicated as a value put on the upper left. The coordinate (p, q) indicates X coordinate of p and Y coordinate of q.

The CPU unit 4 displays the color image photographed by the imaging section 2 on the observed image display region 304 of the display section 3 via the display processing unit 9, and receives the setting of the processing target region AREA from the user. When the user sets the processing target region AREA, the CPU unit 4 executes the measurement process of the color area in response to the instruction within the range specified for the region. The processing target region AREA is indicated by a start coordinate START and an end coordinate END indicated with the coordinates of the frame memory FM1.

The CPU unit 4 acquires the HVC information with respect to each pixel PEL in the set processing target region AREA, determines whether the HVC information satisfies the predetermined condition from the pixels included in the processing target region AREA, and calculates the number of pixels that satisfies the condition in the processing target region AREA.

For instance, as shown in FIG. 4, the HVC information is acquired for the pixel having a coordinate of (2, 2), determination is made whether the HVC information satisfies the predetermined condition for the pixel, and the number of pixels is calculated by counting up when the condition is satisfied. Similar determination is repeated for the pixel having a coordinate of (3, 2) shifted by one in the X direction. After the determination is repeated for all the pixels PEL included in the processing target region AREA, the determination results are outputted.

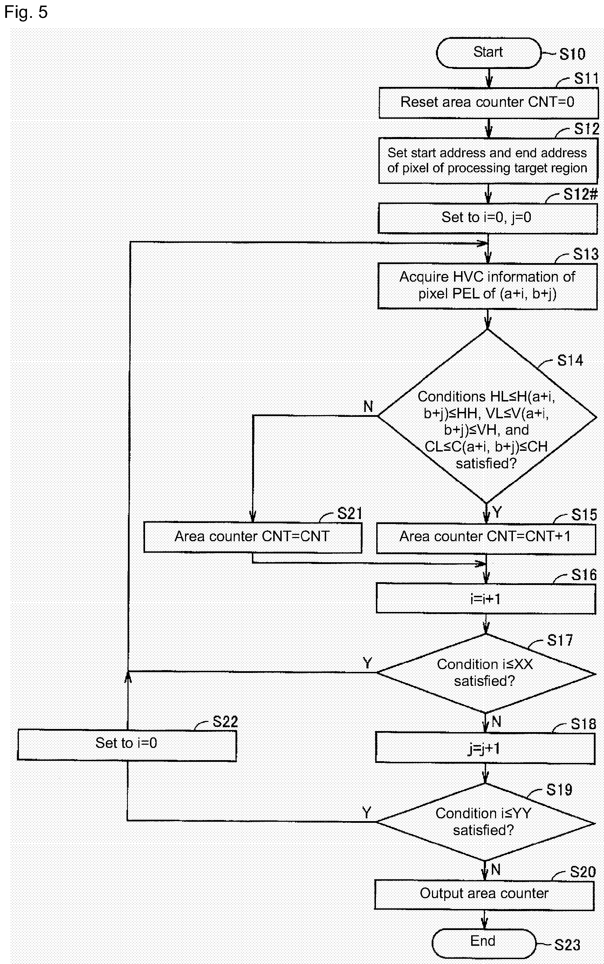

FIG. 5 is a flowchart describing execution of the process of counting the color area according to the embodiment of the present invention.

With reference to FIG. 5, as described above, the processing target region AREA is first set in the observed image display region 304, and the measurement process of the color area is started by pressing the "measurement execution" button 301 described in FIG. 3 (step S10). An area counter value CNT is reset (reset area counter value) (CNT=0) to measure the color area corresponding to the number of pixels that satisfies the predetermined condition included in the processing target region AREA (step S11).

The start address START and the end address END of the pixel of the processing target region AREA are then set (step S12). Thus, the coordinate of the starting point and the coordinate of the end point are set, and the upper limit value XX when proceeding in the X direction and the upper limit value YY when proceeding in the Y direction to be hereinafter described are set. Next, i, j which are to be variables are set to the initial value 0 (step S12#).

The HVC information of the pixel PEL of (a+i, b+j) (i, j=0) corresponding to the start address START is then acquired (step S13). Next, determination is made whether or not the color parameters included in the HVC information of the pixel PEL satisfy the predetermined condition. Specifically, determination is made whether the three conditions, that is, whether the hue value H (a+i, b+j) included in the HVC information is within the range between a hue upper limit value HH and a hue lower limit value HL, whether the value V (a+l, b+j) is within the range between a value upper limit value VH and a value lower limit value VL, and whether the chroma value C (a+i, b+j) is within the range between a chroma upper limit value CH and a chroma lower limit value CL (step S14).

In step S14, the process proceeds to step S15 when all the conditions are satisfied, and the area counter value CNT is set to CNT=CNT+1. Next, the variable i is set to i=i+1 to have the pixel in the X direction as the measurement target (step S16).

When the conditions are not satisfied in step S14, the process proceeds to step S21, the area counter value CNT maintains the state, that is, CNT=CNT (step S21), and the process proceeds to step S16.

When the variable i satisfies i≤XX in step S17, the process returns to step S13, the HVC information of the pixel PEL of (a+i, b+j) is acquired, determination in step S14 is executed to determine whether or not the conditions are satisfied, and the area counter value CNT is incremented according to the condition.

When the variable i is incremented and becomes i>XX in step S17, specifically, when greater than or equal to the upper limit value XX in the case of proceeding in the X direction, determination is made as exceeding the boundary region in the X direction in the processing target region AREA, and thus the process proceeds to step S18, and the variable j is set to j=i+1 to have the pixel in the Y direction as the measurement target (step S18). To explain with reference to FIG. 4, the start address START (2, 2) and the end address END (12, 7) are set, the upper limit value XX in the X direction is set to 10, and the upper limit value YY in the Y direction is set to 5. When shifted by one in the X direction from the pixel PEL of (2, 2) until reaching the pixel PEL of (2+i(i=10), 2), determination in step S14 is executed, and the pixel exceeding the boundary region in the X direction is selected when i=11 in S16. Thus, similar processes as above are executed on the region shifted by one in the Y direction and the value of j is incremented.

Determination is made whether the variable j satisfies the condition j≤YY in step S19. When the condition j≤YY is satisfied in step S19, determination is made that the boundary region in the Y direction is not exceeded similar to the X direction, and the process proceeds to step S22.

In step S22, the variable I is set to i=0, and the process proceeds to S13. For instance, to explain with reference to FIG. 4, when the pixel PEL of (2+i(i=10), 2) is reached, the determination in step S14 is executed, and i=11 in step S16, the process proceeds to S18, and the variable j is set to j+1. Since the variable j does not exceed the upper limit value YY (YY=5) in step S19, the process proceeds to step S22, proceeds to the pixel PEL of (2, 3), and determination is made whether or not the HVC information of the corresponding pixel satisfies the predetermined conditions, similar to the above.

Since the pixel exceeding the boundary region in the X direction and the Y direction is selected when variable i>XX and variable j>YY, the process proceeds from step S19 to step S20, and the area counter value CNT is outputted.

That is, the HVC information described above is acquired for each pixel of the processing target region AREA, determination is made whether or not the predetermined conditions are satisfied, the area counter value corresponding to the color area is outputted, and the process of counting the color area is terminated (end) (step S23).

In this way, the area counter value CNT as the determination result in the processing target region AREA is detected. The quality determination of the observed image is executed using the detected area counter value CNT. The quality determination of the color area of the observed image will be described later.

The setting of the color parameter range included in the HVC information of the pixel PEL to be counted up as color area will be described next. Specifically, "setting mode" will be described.

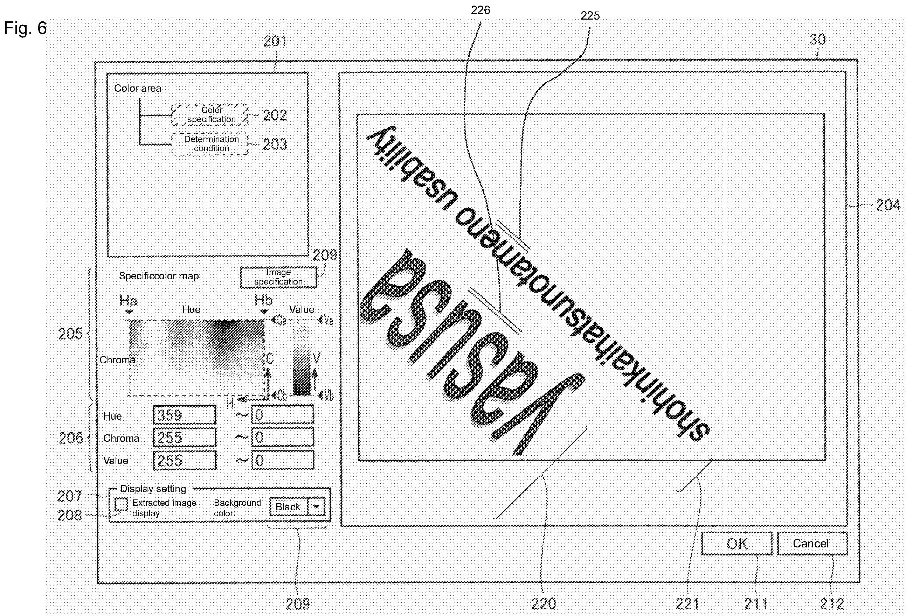

FIG. 6 shows a view for explaining an execution screen of setting mode according to the embodiment of the present invention.

With reference to FIG. 6, the mode is switched to "setting mode" by, e.g., pressing the "setting" button 302 of FIG. 3, and in particular, a screen of "color specification" setting mode to be described later for setting conditions to be used in measuring the color area is shown. In FIG. 6, an image display region 204 is arranged on the right part of the display region 30 of the display section 3, and a region 201 is arranged on the upper left part. A display indicating the setting mode of "color area" is shown in the setting screen of the color area in the region 201. A state in which two setting modes are selectable as the setting mode of "color area" is shown, specifically, the "color specification" setting mode for setting the color parameter range to be counted up as the color area and "determination condition" setting mode for setting the determination parameters to be used in executing quality determination of the color area are shown. In FIG. 6, a case in which the "color specification" setting mode is selected as the setting mode of "color area" is shown. For instance, the "color specification" setting mode is selected by specifying the region 202 indicated as "color specification" with a mouse etc. in the region 201, and the "determination condition" setting mode is selected by specifying the region 203 indicated as "determination condition". In the present embodiment, setting is so assumed that the screen of "color specification" setting mode is displayed as an initial value in the setting mode of "color area" by way of example, but is not limited thereto, and the screen of "determination condition" setting mode may be displayed, or the screen of "color specification" setting mode may be displayed according to a different method.

In the display region 30, a two-dimensional specific color map (color coordinate) based on the hue and chroma which are color parameters of the HVC information, and a one-dimensional specific color map (color coordinate) based on the value are displayed in the specific color map region 205 respectively. Specifically, the two-dimensional color coordinate with hue and chroma parameters as the H axis and the C axis, and the one-dimensional color coordinate with the value parameter as the V axis are shown. On the specific color map, the color parameter region 206 is displayed in which the color parameter range selected by specification of the user is converted to numerical data in decimal numeral notation. Here, a case where association is made with the numerical values of 0 to 359 as the range of the hue parameter, association is made with the numerical values of 0 to 255 as the range of the chroma parameter, and association is made with the numerical values of 0 to 255 as the range of the value parameter is shown. That is, in the two-dimensional specific color map (color coordinate) formed based on the hue parameter and the chroma parameter, the specific range of the hue and the chroma of the specific color can be set. Furthermore, in the one-dimensional specific color map (color coordinate) formed based on the value parameter, the specific range of the value of the specific color can be set.

In the case of FIG. 6, regarding specification of the specific color in the specific color map, a case in which the range of hue parameter Ha(359) to Hb(0) is set, the range of chroma parameter Ca(255) to Cb(0) is set, and the range of value parameter Va(255) to Vb(0) is set is shown. That is, a case in which the range of all the colors is specified is shown. This range can be adjusted by moving the line (H=Ha, Hb in H coordinate) (also referred to as line Ha, Hb) indicating the upper limit value and the lower limit value of the hue parameter in the two-dimensional specific color map (color coordinate). For instance, the line Ha, Hb can be dragged to be moved to an arbitrary position using a mouse or a pointing device. The value corresponding to the range of hue parameter indicated in the color parameter region 206 also changes in response to the movement. This is the same for the chroma parameter and the value parameter, and thus detailed description will not be repeated.

In the above description, a case where the range of the hue parameter of the color parameter region 206 is changed by moving the line Ha, Hb to an arbitrary position using a mouse and the like has been described, but the range of the hue parameter can obviously be changed by inputting a numerical value using a keyboard etc. to the range of the hue parameter in the color parameter region 206. In this case, the line Ha, Hb indicating the upper limit value and the lower limit value of the hue parameter is automatically adjusted to the corresponding position in the two-dimensional specific color map (color coordinate). This is the same for the chroma parameter and the value parameter.

A display setting region 207 for selecting whether or not to display the image from which the specific color is extracted in the image display region 204 of the display region 30 is arranged in the display region 30. A check box is checked by specifying the check box in the display setting region 207 using a mouse etc. When the check box is checked, an extracted image process is executed and the extraction-processed image is displayed in the image display region 204. The user can set a background color of the extraction-processed image through specification at a background color setting region 209. Here, a case where black is selected for the background color is shown. If the corresponding check box region is again specified using a mouse, etc. when the check box is checked, the check is cleared.

Furthermore, an image specification button 209 is arranged between the region 201 and the specific color map region 205, where, although not shown, an image file stored in the main storage unit 8 or the auxiliary storage unit 5 is displayed so as to be selectable by pressing the image specification button 209 using a mouse and the like. The selected image is displayed in the image display region 204 by selecting an arbitrary image file. In the present embodiment, one example of the image selected by pressing the image specification button 209 is shown.

Character arrays of two types of size are shown in the image display region 204 of FIG. 6. Specifically, an image 220 of large character array including a character 226 (Japanese hiragana "su" in the figure, hereinafter referred to simply as character 226), and image 221 of small character array including a character 225 (Japanese hiragana "me" in the figure, hereinafter referred to simply as character 225) are shown.

It is assumed that the images 220 and 221 have similar color but have different color parameters.

A case of extracting only the image 220 of the images 220 and 221 by setting an optimum color parameter range in the "color specification" setting mode will be described by way of example.

An "OK" button 211 and a "cancel" button 212 are arranged at the lower right portion of the display region 30 of FIG. 6, where the "color specification" setting mode is terminated by pressing the "OK" button 211 and then switched to the measurement mode as described above. In this case, the specific range of the specific color displayed on the color parameter region 206 in the display region 30 is set and stored in the main storage unit 8 or the auxiliary storage unit 5, and used when executing the measurement mode described above.

Similar to the "OK" button 211, switching to the measurement mode is made by pressing the "cancel" button 212, but in this case, the specific range of the specific color displayed in the color parameter region 206 is not set nor stored in the main storage unit 8 or the auxiliary storage unit 5, and the specific range stored in the main storage unit 8 or the auxiliary storage unit 5 at the previous time or the initial time is used when executing the measurement mode described above.

The input process of a specific point in the image display region 204 will now be described.

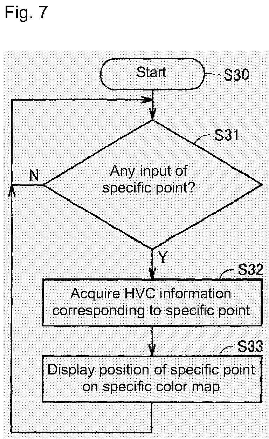

FIG. 7 shows a flowchart describing the input process of the specific point according to the embodiment of the present invention.

With reference to FIG. 7, the specific point is acceptable in the image display region 204 in the "color specification" setting mode (start) (step S30). Determination is made whether or not the input of specific point is made in the image display region 204 (step S31). When an input of specific point is made in the image display region 204 in step S30, the HVC information of the pixel corresponding to the specific point of the image displayed in the image display region 204 corresponding to the specific point is acquired (step S33). The position of the specific point on the specific color map is displayed based on the HVC information. The process again returns to step S31, and when the input of a specific point is again made, the process proceeds from step S31 to step S32 and a similar process is performed.

The image extraction process in the image display region 204 will now be described.

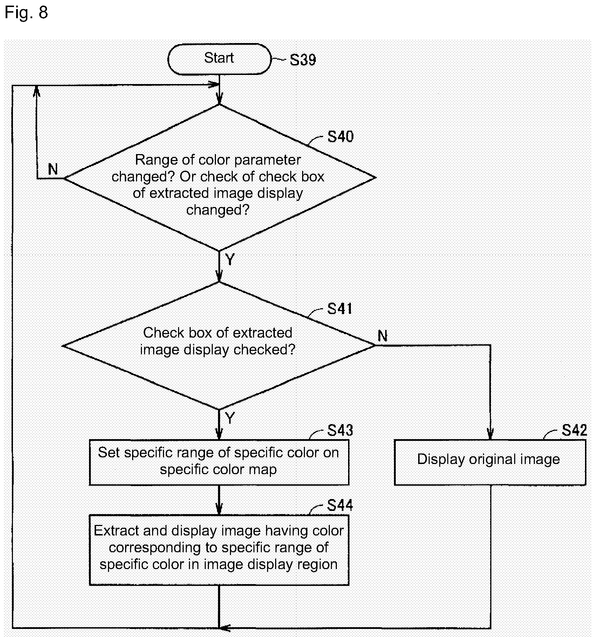

FIG. 8 is a flowchart describing the image extraction process according to the embodiment of the present invention.

With reference to FIG. 8, when the image extraction process starts (start) (step S39), determination is first made whether the range of the color parameters in the color parameter region 206 is changed or whether the check of the check box of the extracted image display is changed (step S40). When the condition of step S40 is not satisfied, the state of step S40 is maintained.

If the range of the color parameters in the color parameter region 206 is changed in step S40, the process proceeds to the next step S41. Specifically, when changed by moving the line Ha, Hb to an arbitrary position using a mouse, etc., in the specific color map region 205 as described above, or when the range of the hue parameter is changed by inputting a numerical value using a keyboard, etc., to, e.g., the range of the hue parameter of the color parameter region 206. Alternatively, the process proceeds to the next step S41 when the check of the check box 208 of the extracted image display in the display setting region 207 is changed.

Determination is then made whether the check box of the "extracted image display" in the display setting region 207 described with reference to FIG. 6 is checked (step S41). When the check box is checked in step S41, the setting of the specific range of the specific color on the specific color map is read (step S43). Specifically, the specific range of the specific color is set based on the range of the color parameter displayed in the color parameter region 206.

The image having a color corresponding to the specific range of the specific color in the image display region is then extracted and displayed (step S44).

The process again returns to the initial step S40.

When the check box of the "extracted image display" is not checked, the original image that is not performed with the extraction process is displayed (step S42). The process again returns to step S40.

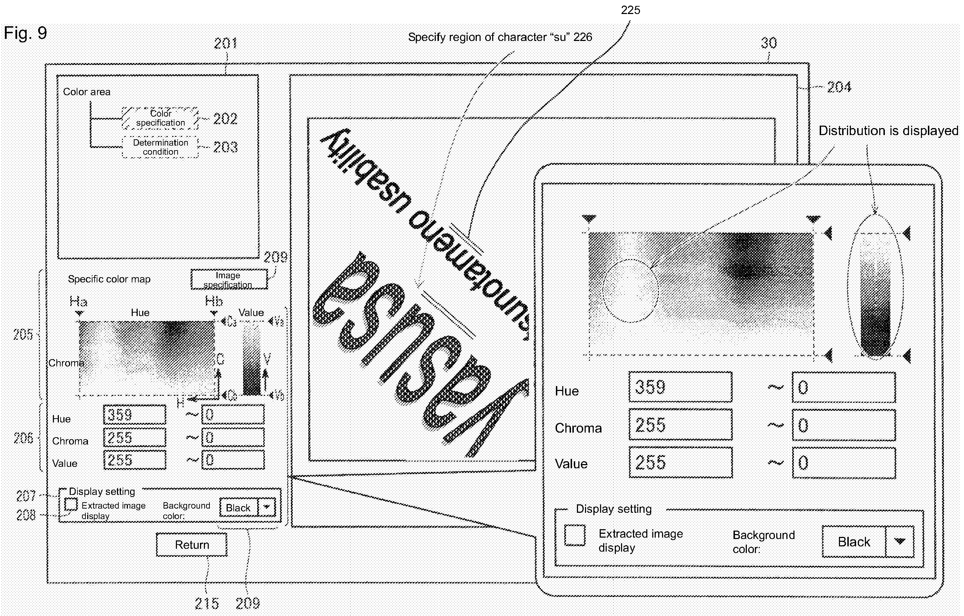

FIG. 9 shows a view for explaining a case where the specific point is inputted with respect to a partial region of the image shown in the image display region 204 of FIG. 6. Here, a case of inputting the specific point with respect to the character 226 of the image 220 will be described. A view in which the specific color map region 205, the color parameter region 206, and the display setting region 207 are displayed in an enlarged manner is show on the right side region.

With reference to FIG. 9, the HVC information of the image corresponding to the specific point is acquired as described in the flowchart of FIG. 7, and the position corresponding to the color of the specific point is displayed on the specific color map in the specific color map region 205. Here, a case in which not only one pixel of the image display region selected by using a mouse or a pointing device is set as the specific point but also the pixels of the surrounding region thereof are also set as the specific point (specific region) is shown. Specifically, the region configured by 9×9 pixels having the pixel selected by the mouse as the center is set as the specific point, where the HVC information is acquired for each of the pixels, and the position corresponding to the color of each of the pixels is displayed on the specific color map in the specific color map region 205. A case in which the specific region configured by a plurality of pixels is specified as the specific point is described here, but is not limited to a plurality of pixels, and the specific region configured only by one pixel may obviously be set as the specific point.

In FIG. 9, a "return" button 215 is displayed, and it is possible to return to the previous screen by pressing the button 215 using the mouse. That is, it is possible to return to the screen before specifying the region of the character 226 with the mouse by pressing the "return" button 215. This is the same for the following cases.

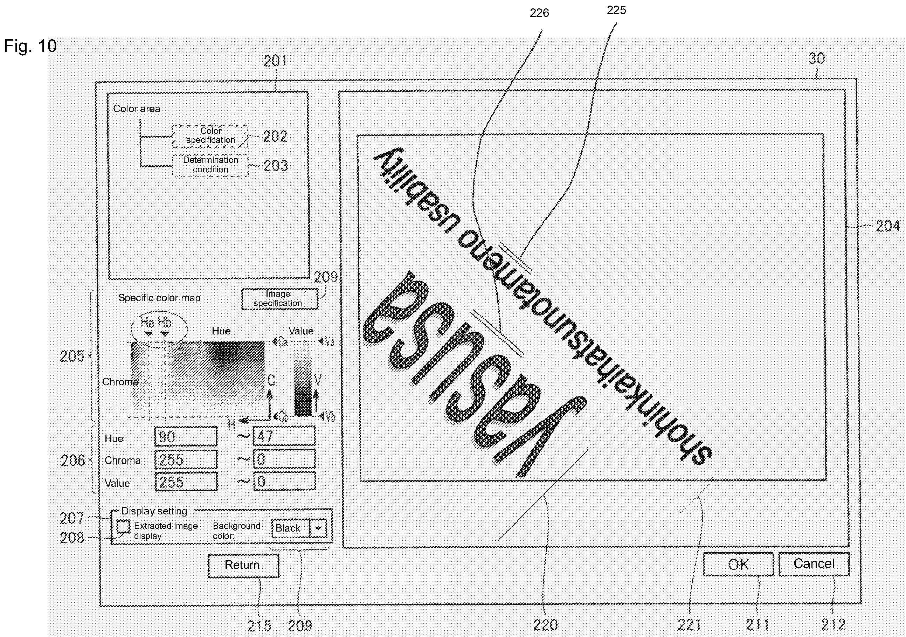

FIG. 10 shows a view for explaining a case of adjusting the range of specific color in the specific color map.

With reference to FIG. 10, a case in which the hue parameters Ha, Hb or the range of hue are adjusted according to the distribution of the specific points shown in FIG. 9 in the specific color map (color coordinate) formed based on the hue and chroma is shown.

Specifically, a case in which adjustment is made to the hue parameters Ha(90) to Hb(47) as the range of hue parameter so as to include the distribution of the specific point of FIG. 9 is shown.

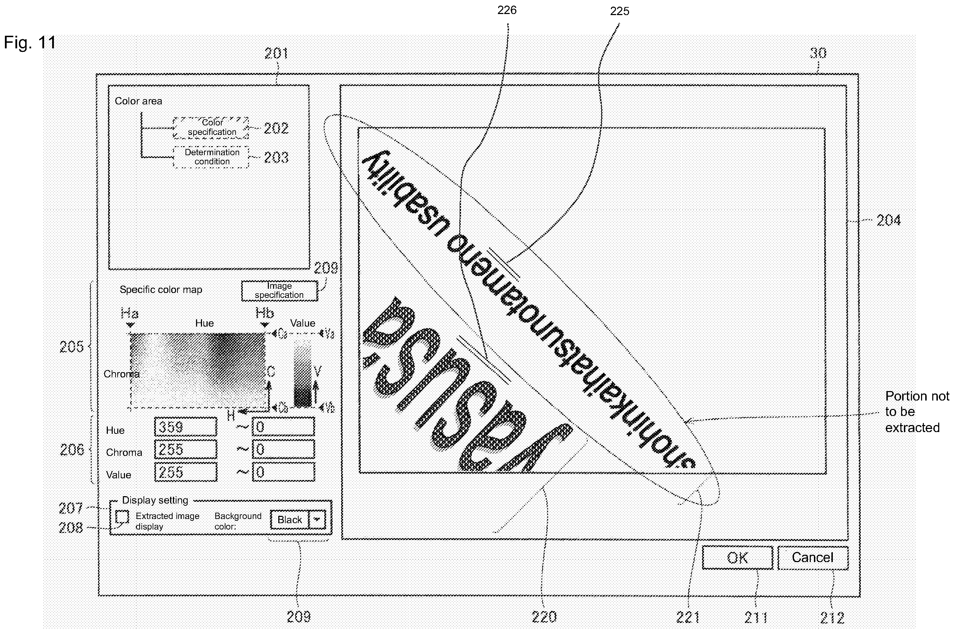

FIG. 11 shows a view for explaining an image to be extraction-processed and an image not to be extraction-processed in the image shown in the image display region 204 of FIG. 6.

With reference to FIG. 11, the image 220 as shown here is to be extraction-processed and the image 221 is not to be extraction-processed.

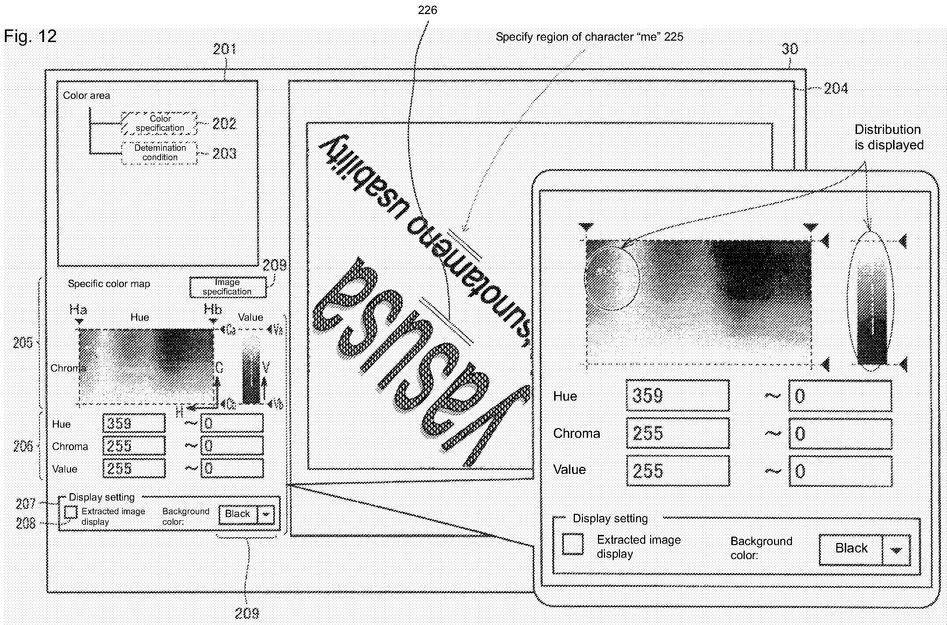

FIG. 12 shows another view for explaining a case of inputting a specific point with respect to a partial region of the image shown in the image display region 204 of FIG. 6. Here, a case in which the specific point is inputted with respect to the character 225 of the image 221 is shown. A view in which the specific color map region 205, the color parameter region 206, and the display setting region 207 are displayed in an enlarged manner is shown on the right side region.

With reference to FIG. 12, the HVC information of the corresponding image with respect to the specific point is acquired as described in the flowchart of FIG. 7, and the position corresponding to the color of the specific point is displayed on the specific color map in the specific color map region 205. Here, a case in which not only one pixel of the image display region selected by the mouse or the pointing device is the specific point, but also in which the pixels of the surrounding region thereof are also set as the specific point (specific region) is shown.

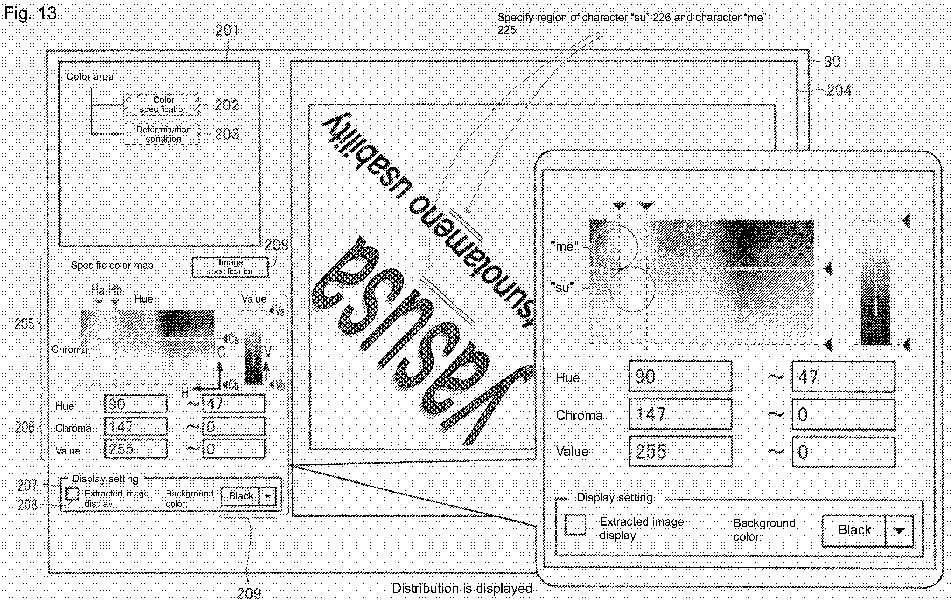

FIG. 13 shows another view for explaining a case in which a specific point is inputted with respect to a partial region of the image shown in the image display region 204 of FIG. 6. A view in which the specific color map region 205, the color parameter region 206, and the display setting region 207 are displayed in an enlarged manner is shown on the right side region.

As shown in FIG. 13, a case in which the specific point is inputted with respect to the character 226 of the image 220 and the character 225 of the image 221 is shown. As shown in the enlarged display, the color parameters corresponding to the character 226 of the image 220 and the character 225 of the image 221 have different ranges of the hue and chroma.

The range of the hue parameter is adjusted to the range of the hue parameter Ha(90) to Hb(47) as described with reference to FIG. 10 to set the hue range corresponding to the character 226 of the image 220 based on the distribution in the case where the specific point is inputted with respect to the character 226 of the image 220 and the character 225 of the image 221. The range of the chroma parameter is adjusted to the range of the chroma parameter Ca(147) to Cb(0) to set the chroma range corresponding to the character 226 of the image 220.

As shown in the enlarged display, the distribution of the specific point corresponding to the character 226 of the image 220 is shown in the range surrounded by the region of the hue parameter Ha to Hb and the chroma parameter Ca to Cb, and the distribution in the case where the specific point is inputted with respect to the character 225 of the image 221 is set outside the range.

Here, a case in which the distribution in the case where the specific point is inputted with respect to the character 226 of the image 220 and the character 225 of the image 221 are displayed in an overlapping manner, that is, displayed as the entire specification is shown, but may be set so that the distribution is switched for every input of the specific point without being displayed in an overlapping manner. The color may be differed for every input of the specific point to distinguish the distribution for the input of the specific point of the character 226 of the image 220 and the input of the specific point of the character 225 of the image 221. Other methods, such as changing the shape, may be adopted for the distinguishing.

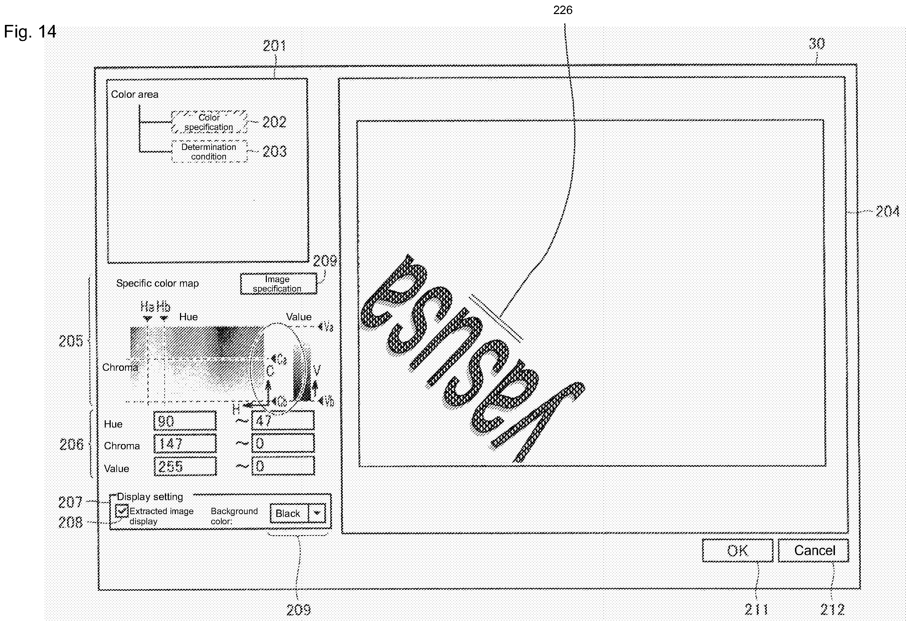

FIG. 14 shows a view for explaining a case where the check box of the extracted image display in the display setting region 207 of FIG. 13 is checked.

With reference to FIG. 14, the specific range of the specific color on the specific color map is set according to step S42, since the check box of the extracted image display is checked in step S41 of FIG. 8 according to the flowchart explained with reference to FIG. 8. Specifically, the range specified in FIG. 13, that is, the range surrounded by the region of the hue parameter Ha to Hb and the chroma parameter Ca to Cb is set as the specific range of the hue and the chroma. Regarding the value, the entire range is set as the specific range.

Thus, the image having the color corresponding to the specific range of the specific color is extracted and displayed in the image display region 204 as described with respect to step S44 of FIG. 8. Specifically, only the portion having the color corresponding to, e.g., the character 226 of the image 220 is extracted, and the portion having the color corresponding to, e.g., the character 225 of the image 221 is not extracted and displayed. In this case, since the background color of the background color setting region 209 is set to black, the background color of the image extraction-processed by the user is assumed to be black, but is not particularly limited thereto, and the background color setting region 209 may obviously be changed to change to another color.

According to the method, only the image 220 of the image 220 and the image 221 is extracted by setting the optimum color parameter range.

The "color specification" setting mode is terminated by pressing the "OK" button 211 using the mouse, the specific range of the specific color displayed in the color parameter region 206 in the display region 30 is set and stored in the main storage unit 8 or the auxiliary storage unit 5, and used when executing the measurement mode described above.

Although not shown, the number of pixels of the image having the color corresponding to the specific range of the specific color may be converted to numerical data and displayed when only the image 220 is extracted. The range of the number of pixels to be determined as the "OK" determination in the measurement mode of the color area in the determination condition setting mode shown below can be easily set by the user in view of the number of pixels by displaying the number of pixels.

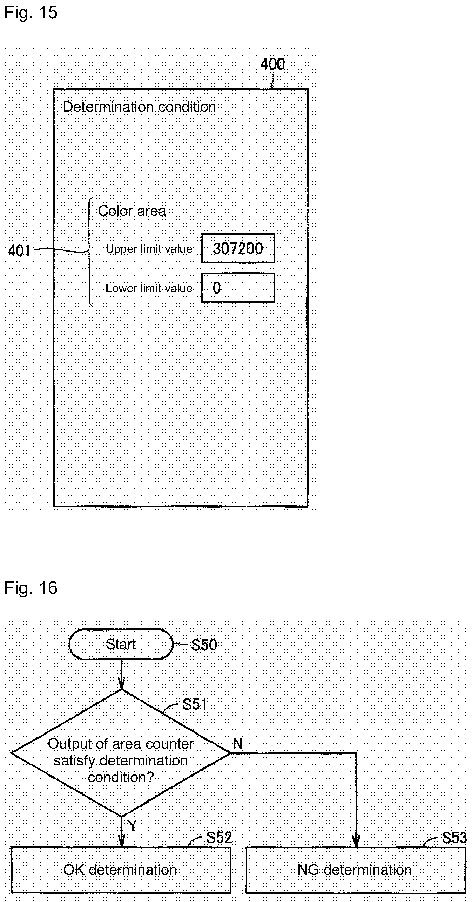

FIG. 15 shows a view for explaining the determination condition setting mode.

As described above, the "determination condition" setting mode is selected by specifying the region 203 indicated as "determination condition" of the region 201 in the setting mode.

FIG. 15 shows a setting screen of the determination condition setting mode.

Specifically, a region 401 for setting the range of color area is arranged, showing the range of the number of pixels to be determined as the "OK" determination in the measurement mode of the color area described above. In the present embodiment, a case of defining the number of pixels of the upper limit value 307200 to the lower limit value 0 as the color area is shown. The numerical values can be inputted by the user by operating the keyboard etc.

FIG. 16 is a determination flowchart for determining quality of the color area in the measurement mode of the color area.

With reference to FIG. 16, the process proceeds to the determination process when an output of the area counter described with reference to the flowchart of FIG. 5 is detected (start) (step S50). Determination is then made whether the output of the area counter satisfies the determination condition (step S51). In step S51, the OK determination is displayed when the determination condition is satisfied (S52). An NG determination is displayed when the determination condition is not satisfied in step S51 (step S53). Specifically, the number of pixels included in the specific range of the specific color described above is counted according to the flowchart of FIG. 5 in the image included in the processing target region AREA described with reference to FIG. 3, where the OK determination is obtained when within the range of the number of pixels defined as the color area set as the determination condition described with reference to FIG. 15, and the NG determination is obtained when exceeding the range of the number of pixels.

Therefore, the image processing device in which the optimum color parameter range of the acquired image is easily set, the color area is measured based on the specific range of the specific color or the color parameter range, and the quality discrimination is executed on the product and the like is realized according to the method described above.

In the above description, the two-dimensional specific color map (color coordinate) with the hue and chroma parameters as H axis and C axis in the specific color map region 205, and the one-dimensional specific color map (color coordinate) with the value parameter as V axis have been described, but the specific color map is not limited thereto, and may obviously be independent one-dimensional specific color map (color coordinate). The combination of the two-dimensional specific color map does not necessarily use the hue and chroma parameters, and three independent color parameters may be arbitrary combined. Alternatively, three-dimensional specific color map (color coordinate) may be obtained based on the hue, chroma, and value parameters.

### (Variant of embodiment)

A case of specifying one region and setting the color parameter range in the two-dimensional specific color map (color coordinate) displayed based on the hue and chroma has been described in the above embodiment, but the present invention is not limited thereto, and a plurality of regions may be specified to set the color parameter range.

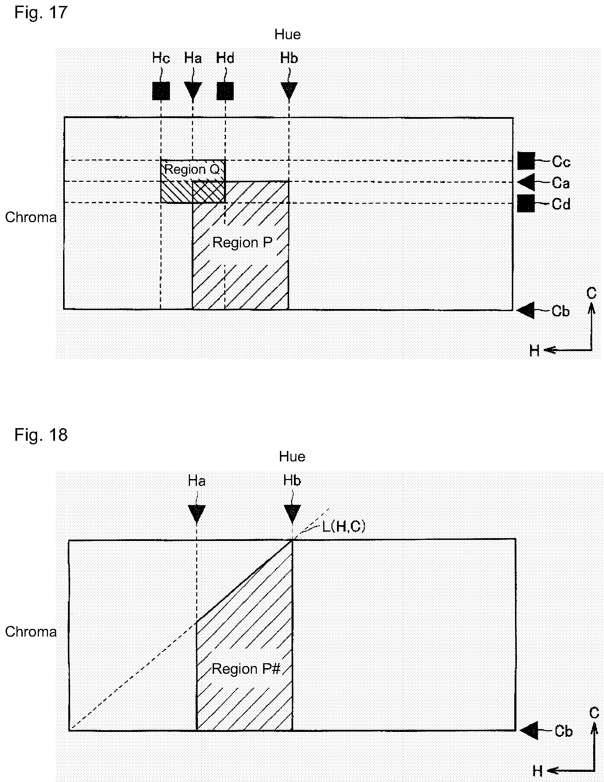

FIG. 17 shows a view for explaining specification of color parameter range according to a variant of the embodiment.

With reference to FIG. 17, the two-dimensional specific color map (color coordinate) is shown based on the hue and chroma, which are the color parameters of the HVC information shown in the display region 30 in the present example similar to the description with reference to FIG. 6. The specific range (region P) of the specific color or the range of the hue parameter Ha to Hb and the range of the chroma parameter Ca to Cb and a specific range (region Q) of the specific color or the range of the hue parameter Hc to Hd and the range of the chroma parameter Cc to Cd are shown.

The specific range of the specific color included in at least one of the region P and the region Q is set in the setting region of the specific color. As described herein, although a case of setting the specific color on the specific color map using one region P is described in the above embodiment, the specific range of the specific color is specified using a plurality of regions (region P and region Q) by using the method. More minute setting of the specific range of the specific color can thus be performed according to the distribution condition of the specific point.

Although not shown, a minute setting mode capable of adding functions regarding the specific color map may be newly provided, so that the user can add and set a function so as to be able to specify a plurality of regions according to the above described method for the specific color map in the minute setting mode. For instance, items for moving to the minute setting mode may be provided in the region 201 of FIG. 6.

FIG. 18 shows another view for explaining the specification of the color parameter range according to the variant of the embodiment.

A region P# in the range of the hue parameter Ha to Hb and surrounded by a line L (H, C) indicated by a two-variable function of the hue and chroma parameters and the chroma parameter Cb is shown in the two-dimensional color coordinate with the hue and chroma parameters as H axis and C axis as shown in FIG. 18. That is, a case of using a function of having the line L (H, C) indicated by the two-variable function of the hue and chroma parameters as the boundary line. More minute setting of the specific range of the specific color can be performed according to the distribution condition of the specific point using the method. Regarding such a function, although not shown, the user can add and set the function according to the above described method for the specific color map in the minute setting mode at which the function can be added for the specific color map.

The present invention is not limited to the above configuration, and a function of setting the region to be indicated by a circle or an ellipse for, e.g., the specific range of the specific color in the specific color map, can be added or the specific range can be set in an arbitrary shape. Minute setting of the specific range of the specific color can be performed according to the distribution condition of the specific point by adding the function, and the optimum color parameter range can be easily set.

The embodiments disclosed herein are illustrative and should not be construed as being limitative. The scope of the present invention is defined by the claims and not by the above description, and the meaning equivalent to the scope of the claims and all the modifications within the scope are encompassed herein.

## Claims

1. An image sensor apparatus comprising:
an imaging section (2) adapted to photograph an inspection target to obtain a color image to be measured;
a display section (3); and
an image processing device (1) which comprises:
an input unit (6), and
a CPU unit (4) which, in a color specification setting mode, is adapted to
specify a specific region with respect to a model color image which is constituted by a plurality of pixels and displayed in an image display region (204) of the display section (3), by setting a specific pixel selectable by a user in the image display region via the input unit (6) and surrounding pixels having a positional relationship defined in advance with respect to the specific pixel as the specific region,
acquire color information represented by at least two variables out of three independent variables defining a color for the pixels contained in the specific region,
display, in a color map region (205) of the display section (3), a color map which bases on the predetermined variables and, as a color map position, the color information, wherein the color information is adjustable by the user via the input unit (6),
extraction-process pixels having the color information corresponding to the color map position set according to an instruction by the user via the input device (6) out of the plurality of pixels configuring the model color image and to display the pixels having the color information corresponding to the color map position in the image display region (204) of the display section (3), wherein a number of the displayed pixels having the color information corresponding to the color map position is displayed, and
to store the color information corresponding to the color map position, wherein the stored color information is useable when executing the measurement mode; wherein
the CPU unit, in a determination condition setting mode, is adapted to set a range of number of pixels inputted by the user via the input unit (6) on a setting screen displayed by the display section (3), as the range to be determined as an OK-determination in the measurement mode; and
the CPU unit, in the measurement mode, is adapted to acquire color information for each pixel included in a processing target region (AREA) of the image to be measured, to determine for each pixel whether the color information of the pixel satisfies the stored color information, and to calculate the number of pixels having color information satisfying the stored color information, wherein
the CPU unit, in the measurement mode, is adapted to obtain the OK-determination when the number of pixels having color information satisfying the stored color information is within the set range for OK-determination.

2. The image sensor apparatus according to claim 1, wherein the CPU unit is adapted to specify a plurality of specific regions with respect to the input of the model color image configured by the plurality of pixels by setting a plurality of specific pixels selected in the image display region via the input unit (6) and surrounding pixels having a positional relationship defined in advance with respect to the specific pixels as the specific regions; and
to display at least two or more color map positions based on the color information for each pixel contained in the specific regions.

3. The image sensor apparatus according to claim 1, wherein
the color information contains three independent variables for defining the color of each pixel; and
the CPU unit is adapted to display a two-dimensional color map complying with the two variables out of the three independent variables and a one-dimensional color map complying with the one remaining variable.

4. The image sensor apparatus according to claim 3, wherein the CPU unit is adapted to extraction-process the pixels having the color information corresponding to the color map position set according to the instruction in the two-dimensional color map out of the plurality of pixels configuring the model color image.

5. The image sensor apparatus according to claim 4, wherein the color map position set according to the instruction includes a line indicated by a two-variable function at a boundary line of the color map position in the two-dimensional coordinate.

## Patentansprüche

1. Bildsensorvorrichtung, umfassend:
einen Bildgebungsabschnitt (2), welcher eingerichtet ist, ein Inspektionsziel zu fotografieren, um ein zu messendes Farbbild zu erhalten;
einen Anzeigeabschnitt (3); und
eine Bildverarbeitungseinrichtung (1), welche umfasst:
eine Eingabeeinheit (6), und
eine CPU-Einheit (4), die in einem Farbspezifikationsfestsetzungsmodus dazu eingerichtet ist,
einen spezifischen Bereich in Bezug auf ein Modellfarbbild zu spezifizieren, weiches aus einer Vielzahl von Pixel zusammengesetzt ist und in einem Bildanzeigebereich (204) des Anzeigeabschnitts (3) angezeigt wird, durch Festsetzen eines spezifischen Pixels, das durch einen Benutzer über die Eingabeeinheit (6) in dem Bildanzeigebereich auswählbar ist, und umliegender Pixel, die eine positionelle Beziehung aufweisen, die im Voraus in Bezug auf das spezifische Pixel definiert sind, als der spezifische Bereich,
Farbinformationen zu erlangen, die durch mindestens zwei Variablen aus drei unabhängigen Variablen, die eine Farbe für die Pixel definieren, die in dem spezifischen Bereich enthalten sind, repräsentiert sind,
eine Farbkarte, die auf den vorbestimmten Variablen basiert, in einem Farbkartenbereich (205) des Anzeigeabschnitts und als eine Farbkartenposition die Farbinformationen anzuzeigen, wobei die Farbinformationen durch den Benutzer über die Eingabeeinheit (6) einstellbar sind,
Pixel, welche die Farbinformationen aufweisen, die der Farbkartenposition entsprechen, die gemäß einer Anweisung durch den Benutzer über die Eingabeeinheit (6) festgesetzt wird, aus der Vielzahl von Pixel, die das Modelifarbbild ausgestalten, zu extrahieren und die Pixel, welche die Farbinformationen aufweisen, die der Farbkartenposition in dem Bildanzeigebereich (204) des Anzeigeabschnitts (3) entsprechen, anzuzeigen, wobei eine Anzahl der angezeigten Pixel, welche die Farbinformationen aufweisen, die der Farbkartenposition entsprechen, angezeigt wird, und
die Farbinformationen, die der Farbkartenposition entsprechen, zu speichern, wobei die gespeicherten Farbinformationen bei Ausführung des Messmodus benutzbar sind, wobei
die CPU-Einheit in einem Bestimmungsbedingungs-Festsetzungsmodus eingerichtet ist, einen Bereich einer Anzahl von Pixel, der durch den Benutzer über die Eingabeeinheit (6) auf einem Festsetzungsbildschirm, der durch den Anzeigeabschnitt (3) angezeigt wird, eingegeben wird, als den Bereich festzusetzen, der als eine OK-Bestimmung in dem Messmodus bestimmt wird; und
die CPU-Einheit in dem Messmodus eingerichtet ist, Farbinformationen für jedes Pixel, das in einem Zielverarbeitungsbereich (AREA) des zu messenden Bildes beinhaltet ist, zu erlangen, für jedes Pixel zu bestimmen, ob die Farbinformationen des Pixel die gespeicherten Farbinformationen erfüllen, und die Anzahl der Pixel zu berechnen, die Farbinformationen aufweisen, welche die gespeicherten Farbinformationen erfüllen, wobei
die CPU-Einheit in dem Messmodus eingerichtet ist, die OK-Bestimmung zu erhalten, wenn die Anzahl der Pixel, die Farbinformationen aufweisen, welche die gespeicherten Farbinformationen erfüllen, innerhalb des festgesetzten Bereiches für die OK-Bestimmung liegt.

2. Bildsensorvorrichtung gemäß Anspruch 1, wobei
die CPU-Einheit eingerichtet ist, eine Vielzahl von spezifischen Bereichen in Bezug auf die Eingabe des Modellfarbbildes, das durch die Vielzahl von Pixel ausgestaltet ist, zu spezifizieren, durch Festsetzen einer Vielzahl von spezifischen Pixel, die über die Eingabeeinheit (6) in dem Bildanzeigebereich ausgewählt werden, und umliegender Pixel, die eine positionelle Beziehung aufweisen, die im Voraus in Bezug auf die spezifischen Pixel definiert sind, als die spezifischen Bereiche; und
mindestens zwei oder mehr Farbkartenpositionen anzuzeigen, die auf den Farbinformationen für jedes Pixel basieren, welches in den spezifischen Bereichen enthalten ist.

3. Bildsensorvorrichtung gemäß Anspruch 1, wobei
die Farbinformationen drei unabhängige Variablen zum Definieren der Farbe jedes Pixels enthalten; und
die CPU-Einheit eingerichtet ist, eine zweidimensionale Farbkarte, die mit den zwei Variablen der drei unabhängigen Variablen übereinstimmt, und eine eindimensionale Farbkarte, die mit der einen verbleibenden Variable übereinstimmt, anzuzeigen.

4. Bildsensorvorrichtung gemäß Anspruch 3, wobei
die CPU-Einheit eingerichtet ist, Pixel, welche die Farbinformationen aufweisen, die der Farbkartenposition entsprechen, die gemäß der Anweisung in der zweidimensionalen Farbkarte festgesetzt wird, aus der Vielzahl von Pixel, die das Modellfarbbild ausgestalten, zu extrahieren.

5. Bildsensorvorrichtung gemäß Anspruch 4, wobei
die Farbkartenposition, die gemäß der Anweisung festgesetzt wird, eine Linie beinhaltet, die durch eine Zwei-Variablenfunktion an einer Grenzlinie der Farbkartenposition in der zweidimensionalen Koordinate angedeutet wird.

## Revendications

1. Appareil capteur d'images comprenant :
une section d'imagerie (2) adaptée pour photographier une cible d'inspection afin d'obtenir une image en couleurs à mesurer ;
une section d'affichage (3) ; et
un dispositif de traitement d'images (1) qui comprend :
une unité d'entrée (6), et
une unité UCT (4) qui, dans un mode de définition de spécification de couleurs, est adaptée pour :
spécifier une région spécifique par rapport à une image en couleurs modèle qui est constituée d'une pluralité de pixels et affichée dans une région d'affichage d'image (204) de la section d'affichage (3), en définissant un pixel spécifique pouvant être sélectionné par un utilisateur dans la région d'affichage d'image par le biais de l'unité d'entrée (6) et de pixels environnants ayant une relation de position définie à l'avance par rapport au pixel spécifique, en tant que la région spécifique,
acquérir des informations de couleur, représentées par au moins deux variables sur trois variables indépendantes définissant une couleur des pixels contenus dans la région spécifique,
afficher, dans une région de carte de couleurs (205) de la section d'affichage (3), une carte de couleurs qui se fonde sur les variables prédéterminées et, en tant que position sur la carte de couleurs, les informations de couleur, dans lequel les informations de couleur peuvent être réglées par l'utilisateur, par le biais de l'unité d'entrée (6),
soumettre à un traitement d'extraction des pixels ayant les informations de couleur correspondant à la position sur la carte de couleurs définie conformément à une instruction de l'utilisateur par le biais du dispositif d'entrée (6), parmi la pluralité de pixels configurant l'image en couleurs modèle et afficher les pixels ayant les informations de couleur correspondant à la position sur la carte de couleurs dans la région d'affichage d'image (204) de la section d'affichage (3), dans lequel un nombre des pixels affichés ayant les informations de couleur correspondant à la position sur la carte de couleurs est affiché, et
stocker les informations de couleur correspondant à la position sur la carte de couleurs, dans lequel les informations de couleur stockées sont utilisables lors de la mise en oeuvre du mode de mesure ; dans lequel :
l'unité UCT, dans un mode de définition de condition de détermination, est adaptée pour définir une plage de nombres de pixels entrés par l'utilisateur par le biais de l'unité d'entrée (6) sur un écran de définition affiché par la section d'affichage (3), en tant que plage à déterminer comme satisfaisante dans le mode de mesure ; et
l'unité UCT, dans le mode de mesure, est adaptée pour acquérir des informations de couleur pour chaque pixel inclus dans une région cible de traitement (AREA) de l'image à mesurer, pour déterminer pour chaque pixel si les informations de couleur du pixel concordent avec les informations de couleur stockées, et pour calculer le nombre de pixels ayant les informations de couleur concordant avec les informations de couleur stockées, dans lequel :
l'unité UCT, dans le mode de mesure, est adaptée pour obtenir la détermination satisfaisante, lorsque le nombre de pixels ayant les informations de couleur concordant avec les informations de couleur stockées se situe dans la plage définie pour la détermination satisfaisante.

2. Appareil capteur d'images selon la revendication 1, dans lequel :
l'unité UCT est conçue pour spécifier une pluralité de régions spécifiques par rapport à l'introduction de l'image en couleurs modèle configurée par la pluralité de pixels, par définition d'une pluralité de pixels spécifiques sélectionnés dans la région d'affichage d'image par le biais de l'unité d'entrée (6) et de pixels environnants ayant une relation de position définie à l'avance par rapport aux pixels spécifiques, en tant que régions spécifiques ; et
pour afficher au moins deux positions sur la carte de couleurs, sur la base des informations de couleur de chaque pixel contenu dans les régions spécifiques.

3. Appareil capteur d'images selon la revendication 1, dans lequel :
les informations de couleur contiennent trois variables indépendantes destinées à définir la couleur de chaque pixel ; et
l'unité UCT est conçue pour afficher une palette de couleurs en deux dimensions, conforme aux deux variables sur les trois variables indépendantes et une palette de couleurs à une dimension, conforme à l'unique variable restante.

4. Appareil capteur d'images selon la revendication 3, dans lequel l'unité UCT est adaptée pour soumettre à un traitement d'extraction les pixels ayant les informations de couleur correspondant à la position sur la carte de couleurs, définie conformément à l'instruction, sur la carte de couleurs en deux dimensions, parmi la pluralité de pixels configurant l'image en couleurs modèle.

5. Appareil capteur d'images selon la revendication 4, dans lequel la position sur la carte de couleurs, définie conformément à l'instruction, inclut une ligne indiquée par une fonction à deux variables, à une ligne de délimitation de la position sur la carte de couleurs à la coordonnée à deux dimensions.
